# DEMANDE DE BREVET EUROPEEN

(11) **EP 4 385 777 A1**
(43) Date de publication de la demande: **19.06.2024**
(21) Numéro de dépôt: 23215692.7
(22) Date de dépôt: 11.12.2023
(51) Int. Cl.: B60J 5/04, B60R 19/18

(54) **PANNEAU DE CARROSSERIE DE VÉHICULE AUTOMOBILE**

(30) Priorité: 12.12.2022 FR 2213186
(71) Demandeur: Compagnie Plastic Omnium SE, 69007 Lyon (FR)
(72) Inventeur: CORNET, Olivier, 01150 SAINTE-JULIE (FR)
(74) Mandataire: LLR

(57) **Abrégé**

L'invention se rapporte à un panneau de carrosserie (2) de véhicule automobile, comprenant au moins un revêtement (4) d'une épaisseur comprise entre 0,1 et 1,5 millimètre, de préférence comprise entre 0,3 et 0,7 millimètre, formant un corps principal du panneau de carrosserie (2), le revêtement étant fixé sur au moins un support (10) en matière plastique formant au moins en partie un cadre du panneau de carrosserie (2).

## Description

L'invention concerne les panneaux de carrosserie de véhicule automobile réalisés en matière plastique.

Les panneaux de carrosserie en matière plastique, par exemple une peau de pare-chocs ou encore un panneau extérieur de hayon, sont communément réalisés par moulage par injection, par exemple en utilisant du polypropylène ou du polycarbonate (bien d'autres matières plastiques peuvent être utilisées pour ce moulage).

Le gain de masse est devenu une problématique centrale pour les développements présents et futurs d'équipements automobiles, les panneaux de carrosserie incluant cette problématique. Par exemple, il est connu de mouler des panneaux de carrosserie en diminuant, localement au niveau du panneau de carrosserie ou sur la totalité de ce dernier, l'épaisseur de matière plastique ou en réduisant la densité de la matière plastique utilisée. Par exemple, et pour une peau de pare-chocs, il est possible de diminuer l'épaisseur du panneau jusqu'à 2,7 millimètres voire 2,5 millimètres (on peut également envisager d'abaisser l'épaisseur localement à 1,9 millimètre, voire à 1,6 millimètre). De la même manière, il est possible de réduire la densité de la matière plastique utilisée, par exemple comprise entre 0,9 et 1,20 pour du polypropylène (notamment en fonction du taux de charge, typiquement en talc).

Cependant, la réduction excessive de l'épaisseur des panneaux de carrosserie ainsi que de la densité de la matière plastique utilisée peut conduire à des défauts d'aspect, des performances mécaniques dégradées du panneau de carrosserie, ou des difficultés de production industrielle en moulage par injection, ces conséquences n'étant pas acceptables pour leur utilisation sur des panneaux de carrosserie extérieure et visibles sur un véhicule automobile. Par conséquent, les diminutions de l'épaisseur ou de la densité d'un panneau de carrosserie sont ainsi limitées pas ces contraintes d'aspect, de résistance et de production. Ainsi, selon les choix effectués en épaisseur, en densité matière, et selon les reconceptions rendues nécessaires par ces changements tout en restant à performance équivalente, il est possible d'obtenir des gains de poids se limitant à environ 5% à 15% seulement.

Une autre possibilité consiste à réaliser des évidements par moulage. En effet, il est possible en injection de réduire la masse d'un panneau en réalisant des évidements d'allègement lors du moulage, mais cela crée des défauts d'aspect (notamment des lignes de recollement) qui ne sont pas acceptables en qualité si la pièce est visible de l'extérieur, ou alors à cacher derrière une autre pièce pleine.

L'invention a pour objet de fournir un panneau de carrosserie extérieur formé par des éléments permettant d'en alléger le poids par rapport aux panneaux de carrosserie de l'art antérieur tout en évitant les inconvénients évoqués ci-dessus et connus de l'art antérieur.

À cet effet, l'invention a pour objet un panneau de carrosserie de véhicule automobile, comprenant au moins un revêtement d'une épaisseur comprise entre 0,1 et 1,5 millimètre, de préférence comprise entre 0,3 et 0,7 millimètre, formant un corps principal du panneau de carrosserie, le revêtement étant fixé sur au moins un support en matière plastique formant au moins en partie un cadre du panneau de carrosserie.

On entend par « revêtement » une pièce fixée sur un cadre et formant le corps principal du panneau de carrosserie, sans recouvrir la surface d'un autre élément du panneau de carrosserie.

Ainsi, et en remplacement d'un panneau de carrosserie injecté en matière plastique, on réalise un revêtement d'une épaisseur bien moindre. Il n'est pas nécessaire de diminuer la densité de la matière plastique utilisée. Le gain de poids est réalisé grâce à une diminution d'épaisseur autorisée bien plus importante du fait d'une fabrication du revêtement. De plus, le support est lui-même réalisé en matière plastique, ce qui permet également de contribuer à un allègement du panneau de carrosserie. Dès lors, le panneau obtenu peut avoir un poids deux fois moins important qu'un panneau de carrosserie obtenu par moulage par injection et pour une surface couverte identique. Il est possible d'obtenir un panneau dont le corps principal est léger et fin tout en permettant d'obtenir une résistance mécanique suffisante pour former un panneau de carrosserie de véhicule automobile, ce qui permet d'obtenir un panneau de carrosserie satisfaisant en termes de résistance comparativement à un panneau traditionnel, par exemple en matière plastique injecté, tout en allégeant ledit panneau de carrosserie.

Selon des caractéristiques additionnelles du panneau de carrosserie prises seules ou en combinaison :
- le revêtement est choisi parmi un film en matière plastique, un revêtement ajouré en matière plastique, de préférence un revêtement tissé en matière plastique, ou un revêtement tissé ou tricoté en fibres naturelles ;
- le revêtement est configuré de manière à autoriser une déformation élastique en traction dans un plan d'extension du revêtement comprise entre 1% et 50%, de préférence comprise entre 3% et 10%;
- au moins une partie du revêtement comprend des ouvertures dont la taille est comprise entre 1 millimètre et 50 millimètres, de préférence comprise entre 10 millimètres et 40 millimètres ;
- au moins une partie du revêtement comprend au moins un motif décoratif ;
- le motif décoratif est formé par un matériau formant le revêtement lorsque le revêtement est en matière plastique tissée ou en fibre naturelles tissées ou tricotées ;
- le revêtement est réalisé à base d'au moins une matière plastique choisie parmi le polypropylène, le polyamide, le polyuréthane, le polychlorure de vinyle, le polyester ou l'élasthane ;
- le revêtement est fixé de manière inamovible au support, par exemple par soudage, par collage, par bouterollage ou par surmoulage du revêtement sur le support ;
- le revêtement est fixé de manière amovible au support, par exemple par pincement du revêtement par le support ;
- le support comprend des moyens de fixation du panneau de carrosserie à une structure d'un véhicule automobile ;
- le panneau de carrosserie comprend plusieurs supports sur lesquels est fixé au moins un revêtement ;
- le support est réalisé à base d'au moins une matière plastique choisie parmi le polypropylène, le polyamide, le polychlorure de vinyle, le polyester, le polytéréphtalate de butylène, ou à base d'un matériau composite ;
- le revêtement est tendu sur le support ;
- le support comprend au moins un barreau de soutien du revêtement ;
- au moins un barreau de soutien s'étend sur une face externe du revêtement ; et
- au moins un barreau de soutien déforme localement le revêtement.

L'invention a également pour objet un véhicule automobile comprenant au moins un panneau de carrosserie selon l'invention.

L'invention a également pour objet un procédé de fabrication d'un panneau de carrosserie de véhicule automobile selon l'invention, dans lequel :
- on réalise au moins un support en matière plastique,
- on réalise au moins un revêtement, et
- on fixe le revêtement sur le support.

De préférence, on réalise plusieurs supports en matière plastique, on fixe au moins un revêtement sur les supports, et on replie le panneau de carrosserie sur lui-même.

### Brève description des figures

L'invention sera mieux comprise à la lecture de la description qui va suivre donnée uniquement à titre d'exemple et faite en se référant aux dessins annexés dans lesquels :
[Fig. 1] est une vue en perspective d'une partie d'un panneau de carrosserie selon l'invention,
[Fig. 2] est une vue en perspective d'une partie d'un panneau de carrosserie selon l'invention, comprenant un motif décoratif,
[Fig. 3] est une vue en perspective d'une partie d'un panneau de carrosserie selon une première variante de l'invention,
[Fig. 4] est une vue en perspective d'une partie d'un panneau de carrosserie selon une seconde variante de l'invention, et
[Fig. 5] est une vue en perspective d'une partie d'un panneau de carrosserie selon une troisième variante de l'invention.

### Description détaillée

Dans ce qui va suivre, on comprend par :
- « ouverture » : toute ouverture traversante ménagée dans le revêtement, permettant d'obtenir un revêtement ajouré (i.e. qui comprend des ouvertures),
- « mailles » : boucles de matière, régulières ou non, dont l'entrelacement forme un revêtement tissé ou tricoté, et
- « perforation » : trou réalisé mécaniquement dans le revêtement initialement plein.

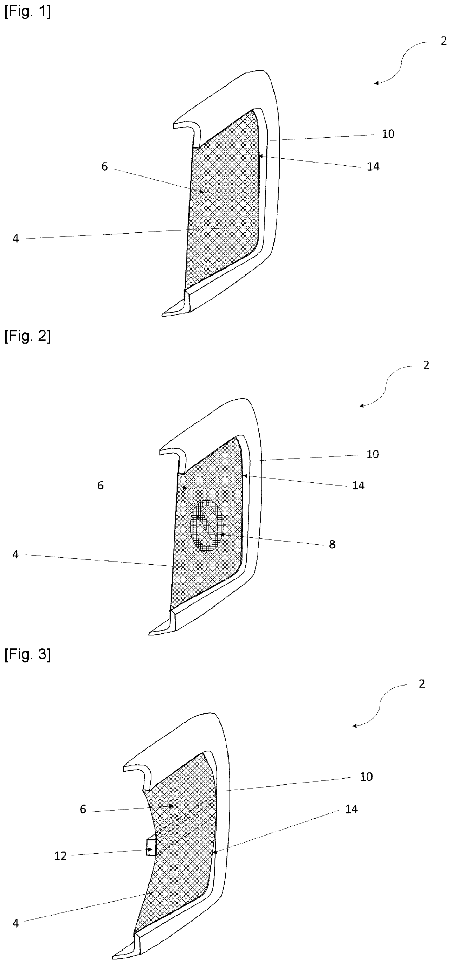

On se réfère désormais à la figure 1 illustrant une partie d'un panneau de carrosserie 2. Ce panneau de carrosserie 2 peut être un pare-chocs avant, arrière, un panneau extérieur d'un hayon, un panneau de portière, etc.

Il s'agit d'un panneau visible depuis l'extérieur du véhicule automobile lorsqu'il est monté sur ledit véhicule automobile. Ce panneau de carrosserie est fixe et non déployable. On entend par là qu'il ne comprend pas de partie mobile par rapport au reste du panneau de carrosserie 2, et qu'il ne subit pas de déformation lors d'un déploiement normal afin de se déplacer.

Le panneau de carrosserie 2 comprend au moins un revêtement 4 d'une épaisseur comprise entre 0,1 et 1,5 millimètre, de préférence comprise entre 0,3 et 0,7 millimètre, formant un corps principal du panneau de carrosserie 2. Dès lors, et comme expliqué ci-dessus, il s'agit d'un revêtement bien plus fin que ceux des panneaux de carrosserie selon l'art antérieur.

Avantageusement, le revêtement 4 est choisi parmi un film plein en matière plastique (une ou plusieurs matières plastiques), un revêtement ajouré en matière plastique, de préférence un revêtement tissé en matière plastique, ou un revêtement tissé ou tricoté à base de fibres naturelles.

En ce qui concerne la possibilité de réalisation d'un film plein en matière plastique, il peut par exemple s'agir d'un film obtenu par extrusion. Ce film pourrait par exemple être découpé par la suite aux dimensions du panneau de carrosserie.

En ce qui concerne la possibilité de réaliser un revêtement ajouré en matière plastique, il peut s'agir d'un film en matière plastique dans lequel des perforations sont réalisées après fabrication du film sur au moins une partie du film. Il peut alternativement s'agir d'un tissu réalisé par tissage de fibres en matière plastique ou naturelles, potentiellement enduites par une autre matière.

Un exemple de film plastique comprenant des fibres plastique est un film comprenant des fibres thermoplastiques, par exemple en polypropylène, orientées sur le plan moléculaire qui sont tissées et liées à une matrice elle-même, par exemple en polypropylène. Un tel matériau utilisé en tant que corps principal d'un panneau de carrosserie permet, comme expliqué plus haut, d'obtenir un gain de poids important par rapport à un panneau traditionnel tout en garantissant une résistance et une rigidité satisfaisante, notamment en termes de résistance aux impacts. Utilisé sous forme de feuilles découpées ou thermoformées sous pression, un tel matériau a un comportement optimal en cas de collision grâce à une absorption optimale de l'énergie et présente une bonne résistance à l'usure.

En ce qui concerne un revêtement tissé ou tricoté en fibres naturelles, on peut citer par exemple un revêtement en fibres de coton ou encore en fibres de lin. Là encore, il serait possible d'enduire ce tissu de matière plastique.

Dans le cas de figure dans lequel le revêtement 4 est au moins partiellement ajouré (par réalisation de perforations ou par la présence de mailles ouvertes), il peut comprendre des ouvertures 6 (représentées sur les figures à des fins illustratives sans respect de dimensions réelles) dont la taille peut être comprise entre 1 millimètre et 50 millimètres, de préférence comprise entre 10 millimètres et 40 millimètres. La présence d'ouvertures 6 permet notamment de laisser passer l'air dans le cas où le panneau de carrosserie 2 est un élément s'opposant à un flux d'air, notamment lorsque le véhicule est en mouvement, ce qui permet de réduire la pression aérodynamique subie lors du roulage du véhicule automobile (en effet, par exemple et dans le cas d'un pare-chocs avant, la pression maximale pouvant s'exercer peut atteindre 250N/m² à 70 km/h, 550N/m² à 110 km/h, et 1200N/m² à 160 km/h), ou encore de permettre une ventilation minimale des parties du véhicule automobile placées derrière le panneau de carrosserie 2.

Avantageusement, le revêtement 4 est configuré de manière à autoriser une déformation élastique comprise entre 1% et 50%, de préférence comprise entre 3% et 10%. Cette déformation est mesurée en traction, sur le revêtement 4 complet et s'étendant dans un plan unique. Ainsi, le panneau de carrosserie 2 peut se déformer en cas de pression exercée sur ce dernier. Il s'agit ici d'éviter une détérioration du panneau de carrosserie 2, soit par déformation irréversible, soit par rupture du revêtement 4. Cette possibilité d'une déformation élastique peut être obtenue grâce :
- à l'élasticité intrinsèque de la matière formant les fibres du revêtement 4, par exemple l'élasthane,
- à la densité relative des fibres et/ou des mailles formant le revêtement 4, et/ou
- à la technique de tissage. On entend par cela la possibilité donnée aux fibres et/ou aux mailles de se mouvoir au sein du revêtement 4.

Le revêtement 4 peut par exemple comprendre au moins une matière plastique choisie parmi le polypropylène, le polyamide, le polyuréthane, le polychlorure de vinyle, le polyester ou l'élasthanne. Le choix du matériau peut, entre autres, être opéré en prenant en compte la déformation autorisée par le matériau formant le revêtement 4. Ce choix pourra également dépendre de la technique de conception du revêtement 4, de la robustesse du matériau, de son esthétisme, etc.

Avantageusement, et comme cela est illustré à la figure 2, au moins une partie du revêtement 4 peut comprendre au moins un motif décoratif 8. Il peut donc s'agir d'un seul motif décoratif 8 ou de plusieurs motifs décoratifs 8, localisés au niveau d'une zone du revêtement 4 ou présents sur tout le revêtement 4.

Avantageusement, et lorsque le revêtement 4 est réalisé par tissage (de fibres synthétiques ou naturelles), le motif décoratif est formé par le matériau formant le revêtement 4. On peut par exemple prévoir une modification du tissage au niveau du ou des motifs décoratifs 8 ou encore la présence de fibres colorées et/ou d'aspect différent au niveau du ou des motifs décoratifs 8. Alternativement, le motif décoratif 8 peut être rapporté sur le revêtement 4, par exemple par impression, peinture, etc.

Le revêtement 4 est fixé sur au moins un support 10 en matière plastique formant tout ou partie d'un cadre du panneau de carrosserie 2. En d'autres termes, le panneau de carrosserie 2 est donc formé par au moins un revêtement 4 rapporté sur au moins un support 10.

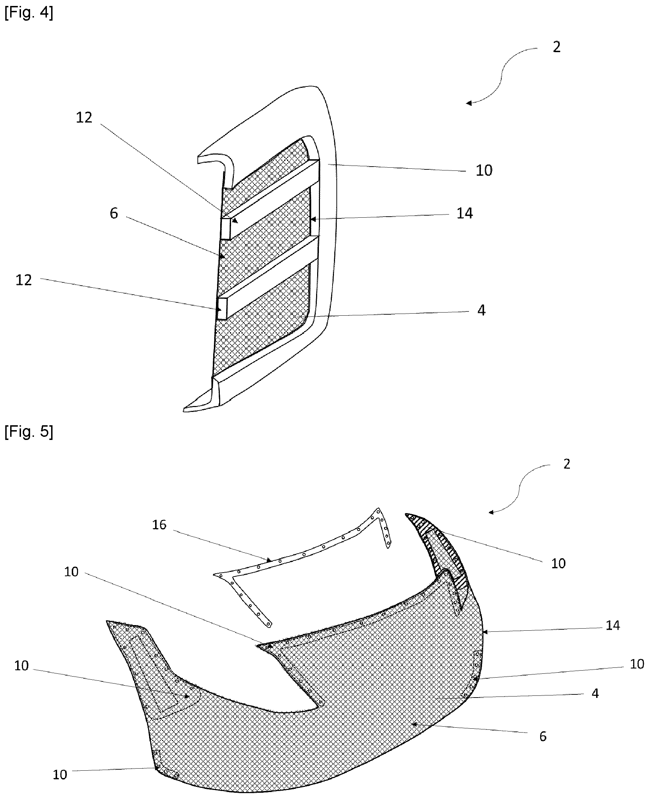

Le revêtement 4 peut avantageusement être tendu sur le support 10. Cela permet entre autres d'obtenir un résultat esthétique optimal. Le support peut par exemple comprendre un ou plusieurs barreaux de soutien 12 (voir figures 3 et 4) pouvant participer à la mise en tension du revêtement 4, comme cela est visible sur la figure 3 illustrant une première variante du panneau de carrosserie 2 selon l'invention.

Ces barreaux de soutien peuvent recouvrir une face externe 14 du revêtement 4 (i.e. une face visible depuis l'extérieur du véhicule sur lequel est monté le panneau de carrosserie 2), et ce à des fins esthétiques et/ou de protection du revêtement 4. Cela est visible sur la figure 4 illustrant une seconde variante du panneau de carrosserie 2 selon l'invention.

Avantageusement, le revêtement 4 est fixé de manière inamovible au support 10, par exemple par soudage, par collage, par bouterollage ou par surmoulage du revêtement 4 sur le support 10. Cela permet de s'assurer d'un ancrage robuste du revêtement 4 sur le support 10.

Alternativement, le revêtement 4 peut être fixé de différentes manières au support 10, par exemple par pincement du revêtement 4 par le support 10. Une telle fixation amovible permet d'envisager un remplacement simplifié du revêtement 4 en cas d'endommagement de ce dernier au cours de la vie du véhicule automobile, ou encore une séparation simplifiée du revêtement 4 et du support 10 lors du retraitement du panneau de carrosserie 2 pour recyclage.

Avantageusement, le support 10 comprend des moyens de fixation du panneau de carrosserie 2 à une structure d'un véhicule automobile 16. Cela est visible sur la figure 5. On obtient dès lors une solution compacte de liaison du panneau de carrosserie 2 à la structure du véhicule automobile, par exemple par clipsage.

Il est possible de prévoir plusieurs supports 10 sur lesquels est rapporté le revêtement 4 ou sont rapportés plusieurs revêtements 4, comme cela est visible sur la figure 5. Il est par exemple possible d'envisager plusieurs supports 10 à bords jointifs entre eux ou non, de couleurs et/ou d'aspects différents, réalisés à partir de matériaux différents, par exemple entre deux supports 10 adjacents.

On peut par exemple envisager de réaliser un panneau de carrosserie 2 comprenant plusieurs supports 10, un revêtement 4 étant fixé sur chaque support 10, l'ensemble des supports 10 étant jointifs de manière à former le cadre du panneau de carrosserie 2.

Le support 10 peut être réalisé à base d'au moins une matière plastique choisie parmi le polypropylène, le polyamide, le polychlorure de vinyle, le polyester, le polytéréphtalate de butylène, ou à base d'un matériau composite.

L'utilisation de plusieurs supports 10 sur lesquelles sont fixés un ou plusieurs revêtements 4 permet d'envisager une livraison d'un panneau de carrosserie 2 assemblé de manière repliée.

En ce qui concerne le procédé de fabrication du panneau de carrosserie 2, ce dernier comprend les étapes suivantes :
- Réalisation d'au moins un support 10 en matière plastique. En fonction du matériau choisi, elle peut être conçue par moulage par injection, moulage par compression, impression en trois dimensions, etc.
- Réalisation d'au moins un revêtement 4. Ce dernier peut être conçu par extrusion, tissage, etc., en fonction notamment du choix du matériau formant le revêtement ou encore de l'aspect final désiré. Le ou les motifs décoratifs 8 peuvent être réalisés lors de la réalisation du revêtement 4, ou une fois que ce dernier a été réalisé, comme décrit ci-dessus.
- Fixation du revêtement 4 sur le support, comme cela a été décrit ci-dessus.

### Description détaillée

2 : panneau de carrosserie
4 : revêtement
6 : mailles ouvertes
8 : motif décoratif
10 : support
12 : barreau de soutien
14 : face externe
16 : structure de véhicule automobile

## Revendications

1. Panneau de carrosserie (2) de véhicule automobile, comprenant au moins un revêtement (4) d'une épaisseur comprise entre 0,1 et 1,5 millimètre, de préférence comprise entre 0,3 et 0,7 millimètre, formant un corps principal du panneau de carrosserie (2), le revêtement étant fixé sur au moins un support (10) en matière plastique formant au moins en partie un cadre du panneau de carrosserie (2).

2. Panneau de carrosserie (2) selon la revendication 1, dans lequel le revêtement (4) est choisi parmi un film plein en matière plastique, un revêtement ajouré en matière plastique, de préférence un revêtement (4) tissé en matière plastique, ou un revêtement tissé ou tricoté en fibres naturelles.

3. Panneau de carrosserie (2) selon l'une quelconque des revendications précédentes, dans lequel le revêtement (4) est configuré de manière à autoriser une déformation élastique en traction dans un plan d'extension du revêtement comprise entre 1% et 50%, de préférence comprise entre 3% et 10%.

4. Panneau de carrosserie (2) selon l'une quelconque des revendications précédentes, dans lequel au moins une partie du revêtement (4) comprend des ouvertures (6) dont la taille est comprise entre 1 millimètre et 50 millimètres, de préférence comprise entre 10 millimètres et 40 millimètres.

5. Panneau de carrosserie (2) selon l'une quelconque des revendications précédentes, dans lequel au moins une partie du revêtement (4) comprend au moins un motif décoratif (8).

6. Panneau de carrosserie (2) selon la revendication précédente, dans lequel le motif décoratif (8) est formé par un matériau formant le revêtement (4) lorsque le revêtement (4) est en matière plastique tissée ou en fibre naturelles tissées ou tricotées.

7. Panneau de carrosserie (2) selon l'une quelconque des revendications précédentes, dans lequel le revêtement (4) est réalisé à base d'au moins une matière plastique choisie parmi le polypropylène, le polyamide, le polyuréthane, le polychlorure de vinyle, le polyester ou l'élasthane.

8. Panneau de carrosserie (2) selon l'une quelconque des revendications précédentes, dans lequel le revêtement (4) est fixé de manière inamovible au support (10), par exemple par soudage, par collage, par bouterollage ou par surmoulage du revêtement (4) sur le support (10).

9. Panneau de carrosserie (2) selon l'une quelconque des revendications précédentes, dans lequel le revêtement (4) est fixé de manière amovible au support (10), par exemple par pincement du revêtement (4) par le support (10).

10. Panneau de carrosserie (2) selon l'une quelconque des revendications précédentes, dans lequel le support (10) comprend des moyens de fixation du panneau de carrosserie (2) à une structure (16) d'un véhicule automobile.

11. Panneau de carrosserie (2) selon l'une quelconque des revendications précédentes, comprenant plusieurs supports (10) sur lesquels est fixé au moins un revêtement (4).

12. Panneau de carrosserie (2) selon l'une quelconque des revendications précédentes, dans lequel le support (10) est réalisé à base d'au moins une matière plastique choisie parmi le polypropylène, le polyamide, le polychlorure de vinyle, le polyester, le polytéréphtalate de butylène, ou à base d'un matériau composite.

13. Panneau de carrosserie (2) selon l'une quelconque des revendications précédentes, dans lequel le revêtement (4) est tendu sur le support (10).

14. Panneau de carrosserie (2) selon l'une quelconque des revendications précédentes, dans lequel le support (10) comprend au moins un barreau de soutien (12) du revêtement (4).

15. Panneau de carrosserie (2) selon la revendication précédente, dans lequel au moins un barreau de soutien (12) s'étend sur une face externe (14) du revêtement (4).

16. Panneau de carrosserie (2) selon l'une quelconque des revendications 14 et 15, dans lequel au moins un barreau de soutien (12) déforme localement le revêtement (4).

17. Procédé de fabrication d'un panneau de carrosserie (2) de véhicule automobile selon l'une quelconque des revendications 1 à 16, dans lequel :
- on réalise au moins un support (10) en matière plastique,
- on réalise au moins un revêtement (4), et
- on fixe le revêtement (4) sur le support (4).

18. Procédé de fabrication selon la revendication 17, dans lequel on réalise plusieurs supports (10) en matière plastique, on fixe au moins un revêtement (4) sur les supports (10), et on replie le panneau de carrosserie (2) sur lui-même.
